# EUROPÄISCHE PATENTANMELDUNG

(11) **EP 1 040 943 A2**
(43) Veröffentlichungstag der Anmeldung: **04.10.2000**
(21) Anmeldenummer: 00104980.8
(22) Anmeldetag: 09.03.2000
(51) Int. Cl.: B60G 17/015

(54) **Federungssystem für Landfahrzeuge, insbesondere Kraftfahrzeuge**

(30) Priorität: 31.03.1999 DE 19914647
(71) Anmelder: DaimlerChrysler AG, 70567 Stuttgart (DE)
(72) Erfinder: Kutscher, Eberhard, 72135 Dettenhausen (DE)

(57) **Zusammenfassung**

Bei einem Federungssystem mit Niveauregelung werden die aufgrund von Längs- und/oder Querbeschleunigungen (b) des Fahrzeuges zu erwartenden Aufbaubewegungen nicht ausgeregelt. Dazu werden für das Aufbauniveau (N) analog zu den zu erwartenden Aufbaubewegungen veränderte Sollwerte vorgegeben.

## Beschreibung

Die Erfindung betrifft ein Federungssystem für Landfahrzeuge, insbesondere nicht spurgebundene Kraftfahrzeuge, mit einer Sensorik, die die Istwerte der Lagen der Fahrzeugräder relativ zum Fahrzeugaufbau bzw. Chassis sowie Längs- und/oder Querbeschleunigungen des Fahrzeuges erfaßt, und mit einer Niveauregelung, welche Steuerorgane bzw. -aggregate zur Veränderung der Istlage der Räder in Abhängigkeit von einem Soll-Istwert-Vergleich zwischen veränderbar vorgebbaren Sollwerten für die Lagen der Räder und zeitlichen Mittelwarten der Istwerte der vorgenannten Lagen steuert.

Ein derartiges Federungssystem ist Gegenstand der DE 41 38 831 A1. Die die Längs- bzw. Querbeschleunigungen des Fahrzeuges wiedergebenden Signale werden dabei so verarbeitet, daß die Nick- bzw. Wankwinkel des Aufbaus bei Längs- bzw. Querbeschleunigung vermindert werden.

Federungssysteme der vorgenannten Art können in konstruktiv vielfältiger Weise ausgestaltet sein.

Beispielsweise kann ein Fahrzeug ein beliebiges passives Federungssystem, beispielsweise mit mechanischen Federn sowie parallel dazu ein steuerbare Zusatzfederungssystem aufweisen, mit dem sich von der Fahrzeugbelastung abhängige Zusatzkräfte erzeugen lassen, um den Fahrzeugaufbau weitestgehend unabhängig von Störkräften auf einem vorgegebenen Niveau relativ zu den Fahrzeugrädern zu halten.

Des weiteren sind Luftfedersysteme bekannt, deren pneumatische Federaggregate, in der Regel Federbälge, über eine entsprechende Steuerung mit einer pneumatischen Druckquelle und/oder der Atmosphäre verbindbar sind, so daß ein vorgegebenes Niveau durch Zu- bzw. Abfuhr von Luft zum bzw. vom Luftfederaggregat eingeregelt werden kann.

Bei hydropneumatischen Federungssystemen sind zwischen dem Fahrzeugaufbau und den Fahrzeugrädern hydraulische Verdrängeraggregate angeordnet, deren Verdrängerarbeitsraum mit einem in der Regel pneumatischen Federspeicher kommuniziert. Durch Zu- bzw. Abfuhr von hydraulischem Medium zum bzw. vom hydraulischen Verdrängeraggregat kann der Fahrzeugaufbau relativ zu den Rädern bzw. einzelnen Rädern angehoben oder abgesenkt werden, so daß sich wiederum ein vorgegebenes Niveau einregeln läßt.

Schließlich kann bei prinzipiell beliebigen Federungssystemen, insbesondere solchen mit mechanischen Federelementen, in Reihe zu jedem bzw. vorgegebenen Federelementen jeweils ein hydraulisches Verdrängeraggregat angeordnet sein, welches ein verstellbares aufbauseitiges oder radseitiges Widerlager für das jeweilige Federelement bildet. Hier kann durch Zu- bzw. Abfuhr von hydraulischem Medium eine Höhenverstellung des Aufbaus relativ zu den jeweiligen Fahrzeugrädern vorgenommen und damit eine Niveauregulierung erreicht werden.

Um den notwendigen Regelaufwand und insbesondere den Leistungsbedarf für die Steuerorgane bzw. -aggregate zur Veränderung der Ist-Lage der Räder relativ zum Aufbau gering zu halten, ist es aus der DE 35 25 367 A1 bekannt, die Istwertsignale für die Stellung der Fahrzeugräder relativ zum Aufbau einer Tiefpaßfilterung zu unterziehen. Dadurch wird gewährleistet, daß nur entsprechend langsame oder längere Zeit anhaltende Niveauänderungen ausgeregelt werden und ein Ansprechen der Regelung bei normalen Federungshüben unterbleibt. Hierbei wird die Tatsache ausgenutzt, daß eine Tiefpaßfilterung eines Signales zu einer zeitlichen Mittelwertbildung des Signales führt, wobei die Zeitspanne, über die die Mittelwertbildung durchgeführt wird, durch die Eckfrequenz des Tiefpaßfilters bestimmt wird.

Aufgabe der Erfindung ist es nun, bei Federungssystemen mit langsam arbeitender Niveauregelung ein optimales Betriebsverhalten zu gewährleisten.

Diese Aufgabe wird erfindungsgemäß dadurch gelöst, daß aufgrund von Längs- und/oder Querbeschleunigungen des Fahrzeuges zu erwartende Aufbaubewegungen nicht ausgeregelt werden, indem die Sollwerte entsprechend der zu erwartenden Aufbaubewegung verändert werden.

Die Erfindung beruht auf dem allgemeinen Gedanken, durch Beschleunigungen des Fahrzeug initiierte Niveauänderungen nicht auszuregeln.

Damit wird der Tatsache Rechnung getragen, daß eine langsam arbeitende Niveauregulierung die bei Brems- oder Beschleunigungsmanövern des Fahrzeuges auftretenden Nickbewegungen sowie die bei Kurvenfahrt auftretende Wankbewegungen des Fahrzeugaufbaus nur verzögert auszuregeln vermag. Dies kann zu recht unerwünschten Erscheinungen führen. Wenn beispielsweise eine Niveauregulierung beim Abbremsen des Fahrzeuges anspricht und der Absinktendenz des Fahrzeugbugs bzw. der Hubtendenz des Fahrzeughecks entgegenwirkt, so ergibt sich bei Beendigung des Bremsmanövers vorübergehend ein Zustand, bei dem das Niveau des Fahrzeugbugs deutlich über und das Niveau des Fahrzeughecks deutlich unter einem gewünschten Sollwert liegen, so daß die Niveauregelung erneut eingreifen muß.

Darüber hinaus wird bei der Erfindung berücksichtigt, daß bei modernen Fahrzeugwerkskonzepten in der Regel bei Nick- und/oder Wankbewegungen des Fahrzeugaufbaus vorbestimmte Sturz- und Spuränderungen der Räder auftreten, um eine dem jeweiligen Fahrzustand angepaßte Abstützung des Fahrzeuges auf der Fahrbahn zu bewirken. Hier würde eine Niveauregulierung unter Umständen zu einer unerwünschten Verschlechterung der Straßenlage des Fahrzeuges führen.

Schließlich ist vorteilhaft, daß durch die erfindungsgemäßen Maßnahmen der Leistungsbedarf für die Niveauregulierung nochmals deutlich abgesenkt werden kann. Damit können Federungssysteme mit Niveauregelung auch für Fahrzeuge verfügbar gemacht werden, deren Betrieb besonders energiesparend erfolgen soll oder muß.

Im übrigen wird hinsichtlich bevorzugter Merkmale der Erfindung auf die Ansprüche sowie die nachfolgende Erläuterung der Zeichnung verwiesen, anhand der besonders bevorzugte Ausführungsvarianten der Erfindung beschrieben werden.

Dabei zeigt
- Fig. 1: eine schematisierte Darstellung eines pneumatischen Federungssystems mit Luftfederung und Niveauregelung und
- Fig. 2: ein Diagramm, welches Niveauänderungen des Fahrzeugaufbaus relativ zu verschiedenen Rädern bei Änderung fahrdynamischer Parameter wiedergibt.

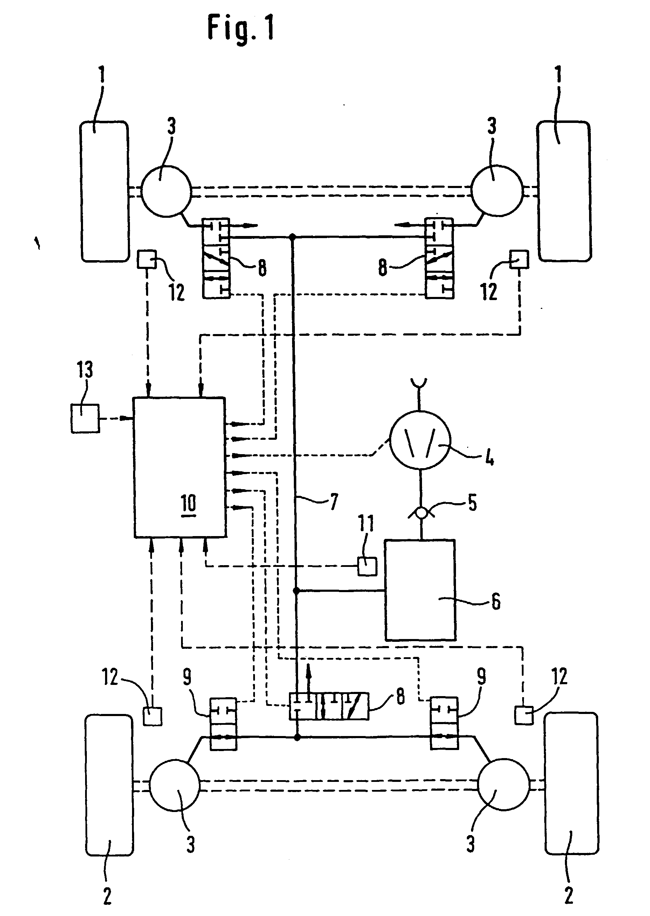

Ein nicht näher dargestelltes Fahrzeug besitzt gemäß Fig. 1 in Draufsicht zwei Vorderräder 1 sowie zwei Hinterräder 2, jeweils mit zugeordneten Luftfederelementen 3, die in üblicher Weise als Luftfederbälge ausgebildet sein können.

Zur Versorgung der Luftfederelemente 3 mit Druckluft ist ein Kompressor 4 vorgesehen, welcher druckseitig über ein Rückschlagventil 5 mit einem pneumatischen Druckspeicher 6 verbunden ist.

Der Druckspeicher 6 ist seinerseits über eine pneumatisches Leitungsnetz 7 mit den Luftfederelementen 3 verbindbar, wobei die Luftfederelemente 3 über Steuer- und Absperrventile 8 und 9 einzeln bzw. gemeinsam mit dem Druckspeicher 6 oder der Atmosphäre verbindbar oder gegenüber der Atmosphäre sowie dem Druckspeicher 6 absperrbar sind. Auf diese Weise läßt sich den Druckfederelementen 3 gesteuert Druckluft zuführen bzw. aus den Federelementen 3 Druckluft abführen oder die im jeweiligen Druckfederelement 3 eingeschlossene Luftmenge unverändert aufrechterhalten.

Die Steuerung der Ventile 8 und 9 erfolgt mittels einer Regelung 10, welche auch den Kompressor 4 steuert.

Zur Steuerung des Kompressors 4 ist die Regelung 10 eingangsseitig mit einem Drucksensor 11 am Druckspeicher 6 verbunden, so daß die Regelung 10 den Kompressor 4 einzuschalten bzw. auszuschalten vermag, wenn der Luftdruck im Druckspeicher 6 einen unteren Schwellwert unterschreitet bzw. einen oberen Schwellwert erreicht hat.

Das Ein- und Ausschalten des Kompressors 4 kann beispielsweise durch Ein- oder Ausschalten eines nicht dargestellten, den Kompressor 4 treibenden Elektromotors erfolgen. Statt dessen kann auch eine nicht dargestellte Kupplung geschlossen bzw. geöffnet werden, über die der Kompressor 4 antriebsmäßig mit dem nicht dargestellten Fahrzeugmotor verbindbar ist.

Zur Steuerung der Ventile 8 und 9 ist die Regelung 10 eingangsseitig mit Niveaugebern 12 verbunden, deren Signale den Abstand des jeweiligen Fahrzeugrades 1 bzw. 2 relativ zum Aufbau wiedergeben.

Darüber hinaus ist die Regelung 10 eingangsseitig mit einem Sensor 13 verbunden, dessen Signale die Quer- und/oder Längsbeschleunigung des Fahrzeugaufbaus wiedergeben.

Das dargestellte System funktioniert wie folgt, wobei zunächst ein Fahrzustand ohne Längs- bzw. Querbeschleunigung des Fahrzeugaufbaus betrachtet wird, d.h. der Sensor 13 erzeugt weder ein Längs- noch ein Querbeschleunigungssignal.

Die Signale der Niveaugeber 12 werden vor ihrer Auswertung immer einer zeitlichen Mittelwertbildung oder einer Tiefpaßfilterung unterzogen, so daß nur langsame bzw. länger anhaltende Niveauänderungen von der Regelung 10 berücksichtigt werden. Die Regelung 10 umfaßt einen Sollwertgeber für die Sollwerte der Abstände zwischen dem Fahrzeugaufbau und den Vorderrrädern 1 bzw. den Hinterrädern 2. Diese Sollwerte können gegebenenfalls durch fahrerseitige Betätigung eines nicht dargestellten Schalters oder in Abhängigkeit von vorgegebenen Parametern, beispielsweise der Fahrgeschwindigkeit, verändert werden.

Die Regelung 10 führt einen Soll-Istwert-Vergleich aus, d.h. es wird die Abweichung zwischen den Sollwertsignalen des Sollwertgebers und den zeitlich gemittelten Istwert-Signalen der Niveaugeber 12 ermittelt. In Abhängigkeit von dieser Abweichung werden die Steuer- und Absperrventile 8 und 9 betätigt, derart, daß die Soll-Istwert-Abweichung ausgeregelt wird.

Erfindungsgemäß ist vorgesehen, daß solche Niveauänderungen nicht ausgeregelt werden, die auf Längs- und/oder Querbeschleunigungen des Fahrzeugaufbaus beruhen.

Diese Längs- und/oder Querbeschleunigungen werden mittels des Sensors 13 erfaßt. Diese Signale werden dann von der Regelung 10 zu einer Modifikation der Sollwerte herangezogen, derart, daß im Ergebnis Niveauänderungen aufgrund von Längs- und/oder Querbeschleunigungen nicht ausgeregelt werden.

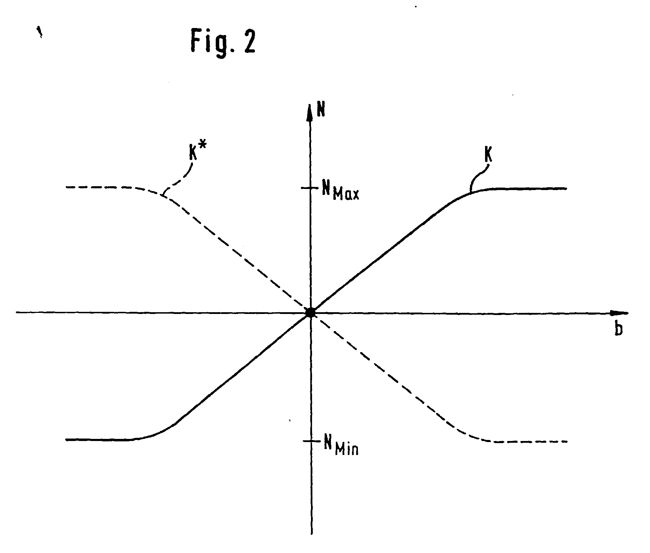

Zur Erläuterung wird auf die Fig. 2 verwiesen.

Im Diagramm der Fig. 2 ist auf der Abzisse ein fahrdynamischer Parameter b, beispielsweise die Längsbeschleunigung des Fahrzeugaufbaus, aufgetragen. Die Ordinate gibt das Niveau N des Fahrzeugaufbaus an einer Fahrzeugachse wieder, wobei das Sollniveau im dargestellten Beispiel den Wert 0 hat, um das Verständnis zu erleichtern.

Grundsätzlich kann dem Sollniveau ein beliebiger Wert zukommen. Wenn dem Sollniveau der Wert 0 zugeordnet wird, so bedeutet dies im mathematischen Sinne lediglich eine zweckmäßige Eichung, die keinerlei Einfluß auf den Sachverhalt hat.

Die Kurve K zeigt nun die Niveauänderungen an der Vorderachse für den Fall, daß
- sich das Fahrzeug auf einer ebenen Fahrbahn bewegt,
- die Luftfederelemente 3 einen Druck aufweisen, bei dem die Istwerte der Abstände zwischen den Rädern 1 bzw. 2 und dem Fahrzeugaufbau bei stehendem Fahrzeug den Sollwerten entsprechen,
- die Federelemente 3 durch die Ventile 8 bzw. 9 sowohl gegenüber dem Druckspeicher 6 als auch gegenüber der Atmosphäre abgesperrt sind und
- das Fahrzeug in Fahrzeuglängsrichtung eine Beschleunigung b erleidet, wobei positive Werte von b eine Geschwindigkeitserhöhung des Fahrzeuges und negative Werte von b eine Geschwindigkeitsverminderung des Fahrzeuges bedeuten.

Die Kurve K zeigt nun, wie der Fahrzeugaufbau an der Vorderachse bei den vorgenannten Bedingungen im Falle einer Beschleunigung des Fahrzeuges im Sinne einer Geschwindigkeitserhöhung ein mit zunehmender Beschleunigung erhöhtes Niveau einnimmt, wobei die Niveauerhöhung bei zunehmender Beschleunigung eine Grenze N_{Max} erreicht, wenn der Federweg aufgezehrt ist.

Falls dagegen das Fahrzeug verzögert wird, d.h. falls das Fahrzeug abgebremst wird und dementsprechend negative Werte von b vorliegen, wird der Fahrzeugaufbau bei Vorwärtsfahrt an der Vorderachse ein zunehmend tieferes Niveau einnehmen, wobei die Niveauabsenkung bei einem Wert N_{Min} begrenzt wird, sobald der mögliche Einfederweg aufgezehrt ist.

Grundsätzlich ähnliche Verhältnisse ergeben sich an der Hinterachse, wobei allerdings der Richtungssinn der Niveauänderungen entgegengesetzt ist zum Richtungssinn der Niveauänderungen an der Vorderachse. Dies wird durch die Kurve K* wiedergegeben, dabei kann wiederum im Extremfall in Ausfederrichtung ein Niveau N_{Max} und in Einfederrichtung ein Niveau N_{Min} nicht überschritten werden.

Zur Vereinfachung der Darstellung wurde hier davon ausgegangen, daß die erreichbaren Grenzwerte N_{Max} und N_{Min} an der Vorder- und der Hinterachse gleich groß ist.

Erfindungsgemäß kann nun die Regelung 10 den vom Sensor 13 gelieferten Beschleunigungssignalen b die gemäß den Kurven K bzw. K* zu erwartenden Niveauänderungen des Fahrzeugaufbaus an der Vorder- bzw. Hinterachse zuordnen. Dazu sind die den jeweiligen Werten b über die Kuven K und K* zugeordneten Werte des zu erwartenden Niveaus N in grundsätzlich beliebiger Form gespeichert, d.h. die Regelung 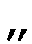 kennt" die Federungscharakteristik des jeweiligen Fahrzeuges.

Damit kann die Regelung 10 die Sollwerte der Niveaus des Aufbaus an den Rädern 1 und 2 jeweils beim Auftreten einer Längsbeschleunigung auf die zu erwartenden Werte abändern mit der Folge, daß die durch die Beschleunigung verursachten Niveauänderungen, insbesondere Nickbewegungen des Aufbaus, zu keiner Soll-Istwertabweichung führen und allein durch eine Beschleunigung bewirkte Aufbaubewegungen nicht ausgeregelt werden.

Falls b in Fig. 2 die Querbeschleunigung bezeichnet, bedeuten positive Werte von b, daß die jeweilige Fahrzeugseite in Richtung der Querbeschleunigung, insbesondere in Richtung der Kurveninnenseite, weist, während negative Werte von b bedeuten, daß die jeweilige Fahrzeugseite entgegen der Richtung der jeweiligen Querbeschleunigung, insbesondere zur Kurvenaußenseite hin, ausgerichtet ist. Dabei zeigt die Kurve k die Verhältnisse an der Vorderachse und die Kurve k* die Verhältnisse an der Hinterachse.

Damit kann die Regelung 10 bei Querbeschleunigungen des Fahrzeuges, insbesondere aufgrund von Kurvenfahrt, die Sollwerte für das jeweilige Niveau des Fahrzeugaufbaus an den Fahrzeugrädern 1 bzw. 2 so modifizieren, daß durch Querbeschleunigungen verursachte Niveauänderungen, insbesondere Wankbewegungen des Aufbaus, nicht ausgeregelt werden.

Gegebenenfalls kann die Sensorik Elemente zur Erfassung der Beladung aufweisen. Damit besteht die Möglichkeit, eine beladungsabhängige Veränderung der Kurven K und K* zu berücksichtigen.

Im Falle der in Fig. 1 dargestellten pneumatischen Federung führt eine Erhöhung der Beladung zu einer Erhöhung der Drücke in den Federelementen 3, so daß der Beladungszustand durch Drucksensoren an den Federelementen ermittelt werden kann. Um zu vermeiden, daß dynamische Druckschwankungen in den Federelementen 3 zu fehlerhaften Ergebnissen führen können, werden die Signale der Drucksensoren einer zeitlichen Mittelwertbildung bzw. einer Tiefpaßfilterung unterzogen.

Abweichend von der in Fig. 1 dargestellten Ausführungsform kann der Beschleunigungssensor 13 entfallen und vorgesehen sein, daß die Regelung mit in Fig. 1 nicht dargestellten Sensoren für die Fahrgeschwindigkeit und gegebenenfalls auch für den Lenkwinkel der Vorderräder 1 verbunden ist, so daß die Längsbeschleunigung aus der Änderung der Fahrgeschwindigkeit und die Querbeschleunigung aus der Fahrgeschwindigkeit sowie dem Lenkwinkel berechnet werden kann. Damit können für die Ermittlung der Längs- und Querbeschleunigung solche Sensoren ausgenutzt werden, die bei Fahrzeugen mit Antiblockierregelung der Bremsanlage sowie Antischlupfregelung der Antriebsräder ohnehin vorhanden sind.

## Patentansprüche

1. Federungssystem für Landfahrzeuge, insbesondere nicht spurgebundene Kraftfahrzeuge, mit einer Sensorik (11,12,13), die die Istwerte der Lagen der Fahrzeugräder (1,2) relativ zum Fahrzeugaufbau bzw. Chassis sowie Längs- und/oder Querbeschleunigungen (b) des Fahrzeuges erfaßt und mit einer Niveauregelung (10), welche Steuerorgane bzw. -aggregate (4 bis 9) zur Veränderung der Istlage der Räder in Abhängigkeit von einem Soll-Istwert-Vergleich zwischen veränderbar vorgebbaren Sollwerten für die Lagen der Räder und zeitlichen Mittelwerten der Istwerte der vorgenannten Lagen steuert,
**dadurch gekennzeichnet,**
daß aufgrund von Längs- und/oder Querbeschleunigungen des Fahrzeuges zu erwartende Aufbaubewegungen nicht ausgeregelt werden, indem die Sollwerte entsprechend der zu erwartenden Aufbaubewegung verändert werden.

2. Federungssystem nach Anspruch 1,
**dadurch gekennzeichnet,**
daß die Steuerorgane bzw. -aggregate (4 bis 9) im Vergleich zu Aufbaubewegungen, die durch Längs- und/oder Querbeschleunigungen des Fahrzeuges bewirkt werden, träge arbeiten.

3. Federungssystem nach Anspruch 1 oder 2,
**dadurch gekennzeichnet,**
daß stationäre Anteile der jeweils zwischen Rad (1,2) und Aufbau wirksamen Vertikalkräfte von der Sensorik erfaßt und bei Ermittlung der vorgenannten zu erwartenden Aufbaubewegungen berücksichtigt werden.

4. Federungssystem nach einem der Ansprüche 1 bis 3,
**dadurch gekennzeichnet,**
daß die Längs- und/oder Querbeschleunigungen aus Sensorsignalen ermittel werden, welche den Lenkwinkel der gelenkten Fahrzeugräder (1) und/oder die Fahrgeschwindigkeit des Fahrzeuges widerspiegeln.
